# FASCICULE DE BREVET EUROPEEN

(11) **EP 2 062 089 B1**
(45) Date de publication et mention de la délivrance du brevet: **19.01.2011**
(21) Numéro de dépôt: 06794364.7
(22) Date de dépôt: 28.08.2006
(51) Int. Cl.: G02B 27/22, G03B 21/60, G09F 15/00, G09F 19/18

(54) **PROCEDE DE VISUALISATION D'UNE IMAGE EN TROIS DIMENSIONS ET TABLEAU AINSI REALISE**
VERFAHREN ZUM ANZEIGEN EINES BILDES IN DREI DIMENSIONEN UND SO HERGESTELLTER SCHIRM
METHOD OF DISPLAYING AN IMAGE IN THREE DIMENSIONS AND PANEL THUS PRODUCED

(43) Date de publication de la demande: 27.05.2009
(73) Titulaire: Lirone, 94210 La Varenne (FR)
(72) Inventeur: KADOCH, Daniel, 94210 La Varenne (FR)
(74) Mandataire: Corret, Hélène
(86) Numéro de dépôt international: PCT/FR2006/001998
(87) Numéro de publication internationale: WO 2008/025888

(56) Documents cités:
- EP-B1- 0 877 967
- FR-A- 742 388

## Description

L'invention se rapporte à un procédé de visualisation directe d'une image en trois dimensions et au tableau réalisé par sa mise en oeuvre.

L'observation d'une image en deux dimensions demande un effort d'interprétation car elle n'est qu'une projection perspective de l'espace dans un plan. Par images, il faut comprendre les photographies, les dessins, les peintures, les images de synthèse ou images réalisées par tout autre moyen.

Voir une image par l'exercice d'un effet optique qui crée l'impression de relief procure une sensation de présence et de réalisme car le spectateur pénètre dans la scène en trois dimensions.

Plusieurs systèmes de l'État de la Technique existent pour donner une impression de volume à une image et, notamment les techniques de stéréoscopie qui consistent essentiellement à représenter deux images, en deux dimensions, d'une même scène prises sous deux angles différents ou selon deux longueurs d'onde complémentaires ou deux plans de polarisation orthogonaux, puis à visualiser ces images. Cette visualisation peut se faire soit à l'oeil nu mais en faisant un effort de visualisation - vision parallèle « à l'infini » ou vision croisée-, soit à l'aide d'appareil stéréoscopes ou de lunettes de vision pour le procédé d'anaglyphe.

Une autre technique, dite des réseaux lignés, consiste à imbriquer les deux images précédentes en les découpant en bandes verticales et en intercalant alternativement une bande de la première image et une bande de la deuxième image. Puis un masque est placé devant l'image globale reconstituée, le masque comportant des bandes verticales alternativement opaques et transparentes. L'oeil gauche voit les bandes impaires, donc de la première image, l'oeil droit voit les bandes paires, donc de la deuxième image.

Le problème principal réside donc dans le fait que l'ensemble de ces techniques nécessite soit de faire un effort de visualisation qui peut être difficile pour certaines personnes, soit d'utiliser un moyen de visualisation des images -lunettes ou masque- qui peut engendrer une situation d'inconfort tout en étant peut pratiques à mettre en oeuvre.

Un autre problème réside dans le fait que ces techniques nécessitent, en outre, deux images d'une même scène prises, de préférence simultanément, sous des angles différents. Ceci implique d'avoir un matériel adapté mais coûteux pour les images photographiques, et rend presque impossible la vision en trois dimensions d'oeuvres -dessins ou peintures-, puisque l'artiste devrait reproduire la même scène sous deux angles différents sans omettre le moindre détail.

FR 742 388 A décrit in procédé de visualisation basé sur la technique, dite des réseaux ligués, et un tableau de visualisation réalisé par une mise en oeuvre dudit procédé.

L'objectif de la présente invention est donc de permettre de visualiser directement une image en trois dimensions sans moyen de visualisation supplémentaire, et de fournir un procédé facile à mettre en oeuvre qui puisse être applicable aux dessins, aux peintures et à des images projetées (telles que, par exemple, des images fixes de type diapositive, ou des images défilantes de type film cinématographique).

A cette fin, l'invention propose un procédé de visualisation directe et un dispositif de mise en oeuvre permettant d'obtenir un effet tridimensionnel par le décalage optique découlant de superpositions variées de portions d'image.

Plus précisément, l'invention a pour objet un procédé de visualisation directe d'une image en trois dimensions comprenant les étapes consistant à découper dans au moins un panneau de structure au moins deux lamelles, et à fixer les lamelles sur un panneau de fond pour qu'au moins une portion de lamelle du panneau de structure soit à une distance déterminée du panneau sur lequel elle est fixée, et à visualiser l'image sur les panneaux.

Selon des formes de réalisation particulières :
■ l'image est visualisée par représentation sur les panneaux de fond et de structure ;
■ l'image est visualisée par projection sur les panneaux de fond et de structure.

L'invention se rapporte également à un tableau de visualisation directe d'une image en trois dimensions comprenant un panneau de fond et au moins un panneau de structure muni d'au moins une découpe définissant au moins deux lamelles, les lamelles étant fixées au dessus du panneau de fond par des moyens de fixation pour qu'au moins une portion de lamelle du panneau de structure soit à une distance déterminée du panneau sur lequel elle est fixée.

Selon des formes de réalisation particulières :
■ les moyens de fixation peuvent être réglables ;
■ les panneaux de structure peuvent être en un matériau suffisamment flexible pour que les lamelles puissent être cintrées ;
■ les panneaux de structure peuvent être précontraints et conformés pour que les lamelles présentent une courbure prédéterminée ;
■ la découpe d'au moins un panneau de structure peut former des lamelles indépendantes les unes des autres ;
■ la découpe d'au moins un panneau de structure peut former des lamelles solidaires d'une base commune ;
■ les panneaux peuvent être de forme et/ou de dimension différentes ;
■ les lamelles d'un même panneau de structure peuvent être de forme et/ou de dimension différentes ;
■ les lamelles peuvent être disposée verticalement dans les conditions de visualisation standard ;
■ au moins deux panneaux de structure peuvent être fixés de manière adjacente et superposée au panneau de fond ;
■ tous les panneaux de structure peuvent être fixés de manière superposée les uns aux autres ;
■ le tableau peut comprendre des panneaux de structure fixés de manière adjacente, et des panneaux de structure fixés de manière superposée ; et
■ le panneau de fond peut être en matériau translucide et le ou les panneaux de structure peuvent présenter une couche en matériau translucide et une couche en matériau opaque dirigée en regard du panneau de fond.

D'autres caractéristiques de l'invention seront énoncées dans la description détaillée ci-après faite en référence aux figures annexées, données à titre d'exemples non limitatifs, et qui représentent, respectivement :
- la figure 1, une vue en perspective d'un mode de réalisation d'un dispositif d'affichage selon l'invention dans lequel les lamelles sont maintenues en position par les moyens de fixation ;
- la figure 2, une vue en perspective d'un autre mode de réalisation d'un dispositif d'affichage selon l'invention avec des lamelles précontraintes ;
- la figure 3, une vue en coupe d'un exemple de conformation des lamelles présent dans le dispositif de la figure 1 ;
- la figure 4, une vue en perspective d'un exemple de représentation en trois dimensions ; et
- la figure 5, une vue cavalière d'un autre mode de réalisation d'un dispositif d'affichage selon l'invention dans lequel les images sont projetées sur le tableau.

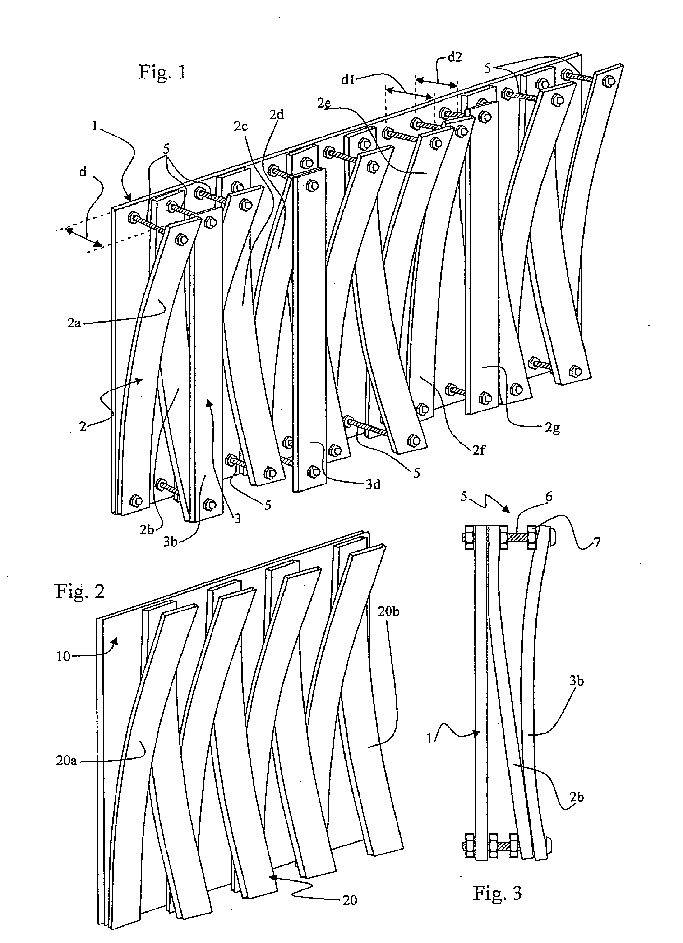

Le mode de réalisation, illustré en figure 1, d'un dispositif d'affichage selon l'invention comprend un panneau de fond 1 et deux panneaux de structure 2 et 3.

Chaque panneau de structure 2-3 est muni d'une découpe déterminant plusieurs lamelles 2a, 2b, 2c, 2e, 2f, 3a, 3b, qui, dans ce mode de réalisation, sont indépendantes les unes des autres au sein d'un même panneau de structure 2-3. Autrement dit, la fixation d'une lamelle 2a est indépendante de la fixation de la lamelle 2b sur le panneau de fond 1. De la même manière, la fixation de la lamelle 3b sur la lamelle 2b est indépendante de la fixation de la lamelle 3d sur la lamelle 2d.

Les panneaux de structure 2-3 sont donc fixés au dessus du panneau de fond 1 par des moyens mécaniques de fixation 5. Pour donner l'effet de relief, les panneaux de structure 2-3 sont agencés pour qu'au moins une lamelle d'un panneau de structure soit maintenue à une distance déterminée du panneau sur lequel elle est fixée. Ainsi, l'extrémité de la lamelle 2a située vers le bas de la figure 1 est maintenue à une distance nulle du panneau de fond sur lequel elle est fixée, alors que l'extrémité de la lamelle 2a située vers le haut de la figure 1 est maintenue à une distance d du panneau 1. D'autres configurations sont possibles : par exemple, la lamelle 2c présente une configuration inverse de la lamelle 2a ; la lamelle 2b présente sensiblement la même configuration que la lamelle 2c, mais elle est recouverte, en outre, par une lamelle 3b -une vue en coupe de cette structure est illustrée en figure 3-; deux lamelles voisines 2e et 2f peuvent être maintenues à des distances d1 et d2 différentes du panneau 1 afin de donner un effet de relief particulier ; plus simplement, une lamelle 2g peut être maintenue à une distance non nulle - mais pas forcément constante- du panneau de fond 1.

La configuration d'ensemble des lamelles représentée en figure 1 n'est donnée qu'à titre exemplatif afin d'illustrer différentes conformations possibles de lamelles. Le dispositif selon l'invention est adaptable en fonction de l'image représentée en permettant une multitude de configurations individuelles des lamelles, mais aussi une multitude de configuration de l'ensemble des lamelles.

Pour faciliter la mise en oeuvre d'un dispositif selon l'invention, les moyens mécaniques de fixation 5 utilisés pour, d'une part, fixer les panneaux les uns sur les autre et, d'autre part, maintenir les lamelle dans la conformation choisie, c'est-à-dire à une distance déterminée, sont des moyens de fixation réglables. Dans l'exemple de réalisation illustré, ils sont constitués de boulons 6 et d'écrous 7 vissés sur les boulons 6 à des hauteurs adaptées pour obtenir l'effet tridimensionnel souhaité en fonction de la conformation des lamelles.

D'autre part, les panneaux de structure peuvent être choisis en un matériau suffisamment flexible pour que les lamelles puissent être cintrées, la distance déterminée entre la lamelle et le panneau sur lequel elle est fixée pouvant alors être variable. Un matériau rigide est aussi utilisable mais les lamelles de ce panneau doivent être agencées pour permettre une fixation avec un angle, adapté à l'effet de relief voulu, par rapport au panneau de fond et/ou à un autre panneau de structure.

Comme illustré en figure 2, le matériau utilisé peut aussi être choisi pour pouvoir être précontraint et conformé de sorte que des lamelles présentent une courbure et sont simplement fixées à une de leur extrémité. La distance déterminée entre une lamelle et le panneau sur lequel elle est fixée étant alors variable. Évidement, les modes de réalisations des figures 1 et 2 peuvent être combinés de façon, notamment, à réduire le nombre de moyens de fixation et de maintien à distance.

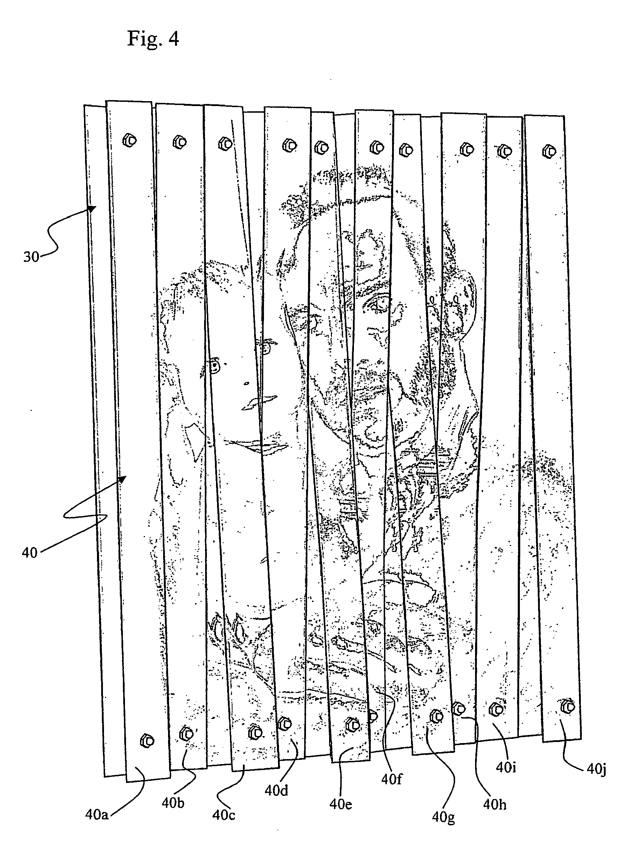

La figure 4 représente un exemple d'une illustration recouvrant un panneau de fond 30 et d'une copie identique recouvrant un panneau de structure 40. Ce dernier est muni d'une découpe déterminant dix lamelles 40a à 40j indépendantes les unes des autres.

Dans cet exemple de réalisation, le panneau de fond et le panneau de structure sont constitués d'un support rectangulaire en aluminium recouvert d'un support représentant une même image, d'une couche de silicone et d'une plaque en polyméthacrylate de méthyle (PMMA) transparente. La couche de silicone permet non seulement le collage de la plaque de PMMA sur le support d'image lors d'une étape de compression, mais elle renforce aussi l'impression de relief et de profondeur à l'image. Puis le panneau de structure est découpé en lamelles rectangulaires indépendantes les unes des autres selon des procédés classiques connus de l'homme de l'art. Ces lamelles sont alors fixées sur le panneau de fond par des moyens de fixation réglables.

Enfin, la hauteur des portions de lamelles est réglée pour qu'au moins une portion de lamelle du panneau de structure soit à une distance déterminée du panneau sur lequel elle est fixée de manière à obtenir l'effet tridimensionnel souhaité.

La conformation de chaque lamelle, ainsi que la configuration d'ensemble donne un effet de vue en trois dimensions qui fait ressortir certains éléments de l'image et donne un effet de volume.

Pour améliorer l'impression de relief, chaque panneau - respectivement de fond et de structure- peut être recouvert d'un support d'images selon un angle de vue respectivement décalé.

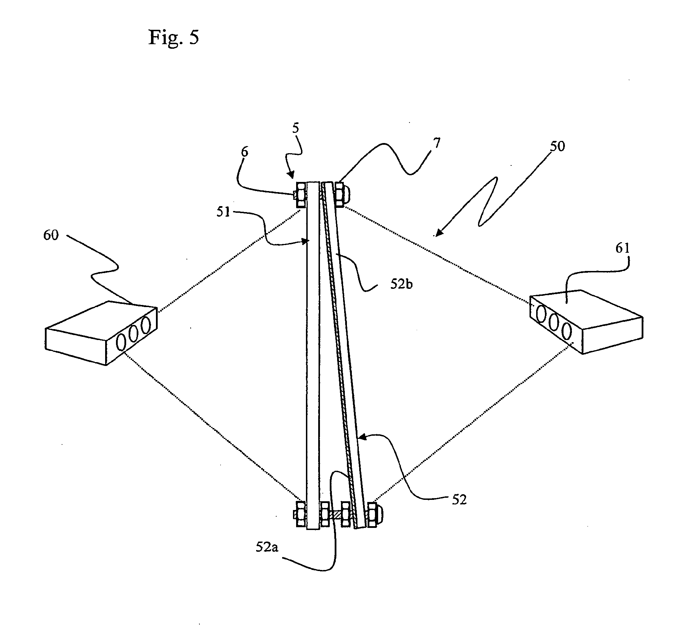

Un autre mode de réalisation de l'invention est représenté en figure 5. Le dispositif représenté sur cette figure permet une projection d'image sur un support 50 selon l'invention. Ainsi, contrairement au mode de réalisation représenté dans les figures 1 à 4, les images ne sont pas matériellement représentées ou constituées sur le panneau de fond 51 et des panneaux de structure 52, mais projetées sur eux par des projecteurs en vis-à-vis 60 et 61.

A cette fin, le panneau de fond 51 est en matériau translucide de manière à permettre la formation d'une image projetée par le projecteur 60 sur la face libre de ce panneau de fond 51 en regard du projecteur 60, et observable en « blanc opaque » par une personne située du côté du projecteur 61.

Sur le panneau de fond 51 est fixé un panneau de structure en lamelles 52. Chacune de ces lamelles est constituée d'une couche en matériau opaque 52a et d'une couche en matériau translucide 52b. Cette dernière couche 52b permet la formation d'une image projetée par le projecteur 61 sur le panneau de structure 52, et la couche opaque 52a empêche la lumière provenant des projecteurs 60 et 61 d'interférer.

Ainsi, un observateur placé du côté du projecteur 61 perçoit sur les lamelles du panneau de structure 52 l'image projetée par le projecteur 61, et perçoit sur le panneau de fond 51 l'image projetée par le projecteur 60.

Un tel mode de réalisation permet de réutiliser les mêmes panneaux de fond et de structure avec des séries d'images différentes. Il est ainsi possible de renouveler régulièrement les images projetées sans avoir à fabriquer un nouveau tableau. Il suffit alors, éventuellement, de modifier l'agencement des lamelles (par modification de la distance de fixation des lamelles par rapport au panneau de fond) en fonction de la structure de la nouvelle image.

Un tel mode de réalisation peut également être utilisé afin de trouver la meilleure configuration possible des lamelles pour une image donnée avant la fabrication d'un panneau par exemple selon le mode de réalisation décrit en référence à la figure 2.

Selon d'autres caractéristiques de l'invention :
- un panneau de structure peut comprendre une découpe formant des lamelles solidaires d'une base commune, à la manière d'un peigne. Dans ce cas, seules les extrémités libres des lamelles peuvent être redressées indépendamment les unes des autre pour donner un effet tridimensionnel à l'image représentée sur le tableau selon l'invention ;
- les moyens de fixation réglables peuvent comprendre une tige rigide munie d'une crémaillère et de loquets élastiquement escamotables fixés sur les lamelles. Ainsi, une lamelle peut être déplacée le long de la crémaillère et bloquée à une distance déterminée du panneau sur laquelle elle est fixée en faisant coopérer le loquet avec la crémaillère ;
- le tableau peut comprendre des panneaux de dimensions différentes. Ainsi, par exemple dans la figure 1, le panneau de structure 3 n'est constitué que de deux lamelles 3b et 3d, alors que le panneau de structure 2 comprend 15 lamelles ;
- la structure du dispositif selon l'invention peut être adaptée à l'image représentée et/ou à l'effet de volume voulu. Ainsi, les lamelles d'un même panneau de structure peuvent être de dimensions différentes, c'est-à-dire de longueur et/ou de largeur différentes dans le cas de structures rectangulaires. D'autre part, les panneaux de structure peuvent être fixés de manière adjacente et superposée au panneau de fond. Il est évidemment possible de combiner ces modes de réalisation de sorte que le dispositif d'affichage comprenne des panneaux de structure fixés de manière adjacente, et des panneaux de structure fixés de manière superposée ;
- les lamelles peuvent être fixées à leurs deux extrémités sur le panneau de fond, de manière à ce que seule la partie comprise entre ces deux extrémité ne soit pas en contact avec le panneau de fond mais maintenue à une distance déterminée ;
- les lamelles peuvent présenter plusieurs courbures successivement incurvées par mise en oeuvre de moyens de fixation intermédiaires, les extrémités des lamelles pouvant être rendues solidaires du panneau sur lequel elles sont fixées ou laissées libres pour se placer à la distance déterminée par les moyens de fixation ;
- la forme du panneau de fond et/ou des lamelles du ou des panneaux de structure est de préférence rectangulaire mais peut aussi être en couronne(s), ovoïdale, tronquée, cylindrique ou des combinaisons de forme laissées à l'appréciation de l'artiste ;
- une lamelle peut être constituée de plusieurs sous-lamelles indépendantes ;
- le matériau utilisé pour les panneaux de structure peut être déformable plastiquement ;
- les moyens de fixations peuvent être chimiques (une colle à adhérence définitive ou à redéposition, de la soudure), des moyens magnétiques, etc ;
- le panneau de fond peut être un mur ou toute surface de support (en bois, béton, brique, matériau translucide, etc.)sur lequel sont fixées des lamelles d'un ou plusieurs panneaux de structure ;
- les lamelles du ou des panneaux de structure peuvent être plus ou moins écartées latéralement pour découvrir plus ou moins d'image du panneau de fond ; il est aussi possible que des lamelles se chevauchent légèrement latéralement ;
- les images du panneau de fond et du(des) panneau(x) de structure peuvent être respectivement identiques, décalées, de couleurs différentes et/ou complémentaires ;
- les panneaux peuvent comprendre des écrans plats de visualisation, de type à cristaux liquides, plasma, ou toute technologie équivalente.

## Revendications

1. Procédé de visualisation directe d'images en trois dimensions, **caractérisé en ce qu'**il comprend les étapes consistant :
a) à découper dans au moins un panneau de structure (2, 3, 20, 40, 52) au moins deux lamelles (2a à 2g, 3b, 3d, 20a, 20b, 40a à 40j, 52a, 52b) ;
b) à fixer les lamelles sur un panneau de fond (1, 10, 30, 51) pour qu'au moins une portion de lamelle du panneau de structure soit à une distance déterminée (d, d1, d2) du panneau (1, 2, 3, 10, 20, 30, 40, 51, 52) sur lequel elle est fixée ; et
c) à visualiser l'image sur les panneaux.

2. Procédé de visualisation directe en trois dimensions selon la revendication 1, dans lequel l'image est visualisée par représentation sur les panneaux de fond et de structure.

3. Procédé de visualisation directe en trois dimensions selon la revendication 1, dans lequel l'image est visualisée par projection sur les panneaux de fond et de structure.

4. Tableau de visualisation directe d'images en trois dimensions **caractérisé en ce qu'**il comprend un panneau de fond (1, 10, 30, 51) et au moins un panneau de structure (2, 3, 20, 40, 52) muni d'au moins une découpe définissant au moins deux lamelles (2a à 2g, 3b, 3d, 20a, 20b, 40a à 40j, 52a, 52b), les lamelles étant fixées au dessus du panneau de fond (1, 10, 30, 51) par des moyens de fixation (5, 6, 7) pour qu'au moins une portion de lamelle (2a à 2g, 3b, 3d, 20a, 20b, 40a à 40j, 52a, 52b) du panneau de structure (2, 3, 20, 40, 52) soit à une distance déterminée (d, d1, d2) du panneau (1, 2, 3, 10, 20, 30, 40, 51, 52) sur lequel elle est fixée.

5. Tableau de visualisation selon la revendication 4, dans lequel les moyens de fixation sont réglables.

6. Tableau de visualisation selon la revendication 4 ou 5, dans lequel les panneaux de structure sont en un matériau suffisamment flexible pour que les lamelles puissent être cintrées.

7. Tableau de visualisation selon l'une quelconque des revendications 4 à 6, dans lequel les panneaux de structure (20) sont précontraints et conformés pour que les lamelles (20a, 20b) présentent une courbure prédéterminée.

8. Tableau de visualisation selon l'une quelconque des revendications 4 à 7, dans lequel la découpe d'au moins un panneau de structure forme des lamelles indépendantes les unes des autres.

9. Tableau de visualisation selon l'une quelconque des revendications 4 à 7, dans lequel la découpe d'au moins un panneau de structure forme des lamelles solidaires d'une base commune.

10. Tableau de visualisation selon l'une quelconque des revendications 4 à 9, dans lequel les panneaux sont de forme et/ou de dimension différentes.

11. Tableau de visualisation selon l'une quelconque des revendications 4 à 10, dans lequel les lamelles d'un même panneau de structure sont de forme et/ou de dimension différentes.

12. Tableau de visualisation selon l'une quelconque des revendications 4 à 11, dans lequel les lamelles sont disposée verticalement dans les conditions de visualisation standard.

13. Tableau de visualisation selon l'une quelconque des revendications 4 à 12, dans lequel au moins deux panneaux de structure sont fixés de manière adjacente et superposés au panneau de fond.

14. Tableau de visualisation selon l'une quelconque des revendications 4 à 12, dans lequel tous les panneaux de structure (2, 3) sont fixés de manière superposée les uns aux autres.

15. Tableau de visualisation selon l'une quelconque des revendications 4 à 12, comprenant des panneaux de structure fixés de manière adjacente, et des panneaux de structure fixés de manière superposée.

16. Tableau de visualisation selon l'une quelconque des revendications 4 à 15 pour la mise en oeuvre du procédé selon la revendication 3, dans lequel le panneau de fond (51) est en matériau translucide et le ou les panneaux de structure (52) présente(nt) une couche en matériau translucide (52b) et une couche en matériau opaque (52a) dirigée en regard du panneau de fond (51).

## Claims

1. Method of displaying images directly in three dimensions, **characterised in that** it comprises the following steps:
a) cutting at least two strips (2a to 2g, 3b, 3d, 20a, 20b, 40a to 40j, 52a, 52b) from at least one structural panel (2, 3, 20, 40, 52);
b) attaching the strips to a back panel (1, 10, 30, 51) so that at least a portion of the strip of the structural panel is disposed at a given distance (d, d1, d2) from the panel (1, 2, 3, 10, 20, 30, 40, 51, 52) to which it is attached; and
c) displaying the image on the panels.

2. Method of displaying images directly in three dimensions as claimed in claim 1, wherein the image is displayed by representing it on the back and structural panels.

3. Method of displaying images directly in three dimensions as claimed in claim 1, wherein the image is displayed by projecting it onto the back and structural panels.

4. Board for displaying images directly in three dimensions, **characterised in that** it comprises a back panel (1, 10, 30, 51) and at least one structural panel (2, 3, 20, 40, 52) provided with at least one cut-out defining at least two strips (2a to 2g, 3b, 3d, 20a, 20b, 40a to 40j, 52a, 52b), which strips are attached above the back panel (1, 10, 30, 51) by fixing means (5, 6, 7) so that at least a portion of the strip (2a to 2g, 3b, 3d, 20a, 20b, 40a to 40j, 52a, 52b) of the structural panel (2, 3, 20, 40, 52) is at a given distance (d, d1, d2) from the panel (1, 2, 3, 10, 20, 30, 40, 51, 52) to which it is attached.

5. Display board as claimed in claim 4, wherein the fixing means are adjustable.

6. Display board as claimed in claim 4 or 5, wherein the structural panels are made from a material that is flexible enough to enable the strips to be bent.

7. Display board as claimed in any one of claims 4 to 6, wherein the structural panels (20) are pre-stressed and shaped so that the strips (20a, 20b) assume a predefined curvature.

8. Display board as claimed in any one of claims 4 to 7, wherein the cut-out of at least one structural panel forms strips that are independent of one another.

9. Display board as claimed in any one of claims 4 to 7, wherein the cut-out of at least one structural panel forms strips integrally joined by a common base.

10. Display board as claimed in any one of claims 4 to 9, wherein the panels are of different shapes and/or dimensions.

11. Display board as claimed in any one of claims 4 to 10, wherein the strips of a same structural panel are of different shapes and/or dimensions.

12. Display board as claimed in any one of claims 4 to 11, wherein the strips are disposed vertically under standard display conditions.

13. Display board as claimed in any one of claims 4 to 12, wherein at least two structural panels are secured in an adjacent arrangement and superposed on the back panel.

14. Display board as claimed in any one of claims 4 to 12, wherein all the structural panels (2, 3) are secured in a superposed arrangement one on top of the other.

15. Display board as claimed in any one of claims 4 to 12, comprising structural panels secured in an adjacent arrangement and structural panels secured in a superposed arrangement.

16. Display board as claimed in any one of claims 4 to 15 for implementing the method as claimed in claim 3, wherein the back panel (51) is made from a translucent material and the structural panel or panels (52) has or have a layer of translucent material (52b) and a layer of opaque material (52a) directed towards the back panel (51).

## Patentansprüche

1. Verfahren zur direkten Visualisierung von Bildern in drei Dimensionen, **dadurch gekennzeichnet, dass** es die Schritte umfasst bestehend aus:
a) ein Ausschneiden von mindestens zwei Lamellen (2a bis 2g, 3b, 3d, 20a, 20b, 40a bis 40j, 52a, 52b) in mindestens einer Strukturplatte (2, 3, 20, 40, 52),
b) ein Befestigen der Lamellen auf einer Grundplatte (1, 10, 30, 51), damit mindestens ein Lamellenabschnitt der Strukturplatte in einer bestimmten Distanz (d, d1, d2) zu der Platte (1, 2, 3, 10, 20, 30, 40, 51, 52), auf der er befestigt ist, ist, und
c)ein Visualisieren des Bildes auf den Platten.

2. Verfahren zur direkten Visualisierung in drei Dimensionen gemäß Anspruch 1, wobei das Bild durch Darstellung auf den Grund- und Strukturplatten visualisiert wird.

3. Verfahren zur direkten Visualisierung in drei Dimensionen gemäß Anspruch 1, wobei das Bild durch Projektion auf die Grund- und Strukturplatten visualisiert wird.

4. Tafel zur direkten Visualisierung von Bildern in drei Dimensionen, **dadurch gekennzeichnet, dass** sie eine Grundplatte (1, 10, 30, 51) und mindestens eine Strukturplatte (2, 3, 20, 40, 52), welche mit mindestens einem Ausschnitt versehen ist, welcher mindestens zwei Lamellen (2a bis 2g, 3b, 3d, 20a, 20b, 40a bis 40j, 52a, 52b) definiert, umfasst, wobei die Lamellen durch Befestigungsmittel (5, 6, 7) über der Grundplatte (1, 10, 30, 51) befestigt sind, damit mindestens ein Lamellenabschnitt (2a bis 2g, 3b, 3d, 20a, 20b, 40a bis 40j, 52a, 52b) der Strukturplatte (2, 3, 20, 40, 52) in einem bestimmten Abstand (d, d1, d2) zu der Platte (1, 2, 3, 10, 20, 30, 40, 51, 52) ist, auf welcher er befestigt ist.

5. Tafel zur Visualisierung gemäß Anspruch 4, bei welcher die Befestigungsmittel einstellbar sind.

6. Tafel zur Visualisierung gemäß Anspruch 4 oder 5, bei welcher die Strukturplatten aus einem Material sind, welches ausreichend flexibel ist, so dass die Lamellen gebogen werden können.

7. Tafel zur Visualisierung gemäß einem der Ansprüche 4-6, bei welcher die Strukturplatten (20) vorgespannt und angepasst sind, damit die Lamellen (20a, 20b) eine vorgegebene Krümmung aufweisen.

8. Tafel zur Visualisierung gemäß einem der Ansprüche 4-7, bei welcher der Ausschnitt mindestens einer Strukturplatte Lamellen bildet, welcher voneinander unabhängig sind.

9. Tafel zur Visualisierung gemäß einem der Ansprüche 4-7, bei welcher der Ausschnitt mindestens einer Strukturplatte Lamellen bildet, welche bei einer gemeinsamen Basis verbunden sind.

10. Tafel zur Visualisierung gemäß einem der Ansprüche 4-9, wobei die Platten von unterschiedlicher Form und/oder Abmessung sind.

11. Tafel zur Visualisierung gemäß einem der Ansprüche 4-10, bei welcher die Lamellen einer gleichen Strukturplatte von unterschiedlicher Form und/oder Abmessung sind.

12. Tafel zur Visualisierung gemäß einem der Ansprüche 4-11, bei welcher die Lamellen unter Bedingungen einer standardmäßigen Visualisierung vertikal angeordnet sind.

13. Tafel zur Visualisierung gemäß einem der Ansprüche 4-12, bei welcher mindestens zwei Strukturplatten in benachbarter Weise befestigt und der Grundplatte überlagert sind.

14. Tafel zur Visualisierung gemäß einem der Ansprüche 4-12, bei welcher alle Strukturplatten (2, 3) in einander überlagernder Weise befestigt sind.

15. Tafel zur Visualisierung gemäß einem der Ansprüche 4-12, umfassend Strukturplatten, welche in benachbarter Weise befestigt sind, und Strukturplatten, welche in überlagernder Weise befestigt sind.

16. Tafel zur Visualisierung gemäß einem der Ansprüche 4-15 zur Bewerkstelligung des Verfahrens gemäß Anspruch 3, bei welcher die Grundplatte (51) aus lichtdurchlässigem Material ist und die Strukturplatte(n) (52) eine Schicht aus lichtdurchlässigem Material (52b) und eine Schicht aus lichtundurchlässigem Material (52a), welche der Grundplatte (51) zugewandt ist, aufweist/aufweisen.
